# EUROPÄISCHE PATENTSCHRIFT

(11) **EP 1 736 691 B1**
(45) Veröffentlichungstag und Bekanntmachung des Hinweises auf die Patenterteilung: **16.07.2008**
(21) Anmeldenummer: 06009493.5
(22) Anmeldetag: 09.05.2006
(51) Int. Cl.: F16H 59/02, F16H 61/26

(54) **Schaltelement für ein Schaltgetriebe**
Shift element for a gearbox
Element de commutation pour une boîte de vitesses

(30) Priorität: 23.06.2005 DE 102005029062
(43) Veröffentlichungstag der Anmeldung: 27.12.2006
(73) Patentinhaber: Schaeffler KG, 91074 Herzogenaurach (DE)
(72) Erfinder: Bamfaste, Guido, 91056 Erlangen (DE)

(56) Entgegenhaltungen:
- DE-A1- 4 410 013
- DE-A1- 10 010 353
- DE-U1- 9 414 598

## Beschreibung

Die Erfindung betrifft ein Schaltelement für ein Schaltgetriebe, insbesondere für ein Kraftfahrzeuggetriebe, zur Übertragung einer Drehbewegung und/oder einer translatorischen Bewegung von einem Betätigungselement auf eine Getriebeschaltwelle, wobei Mittel zur Schwingungsentkopplung zwischen dem Betätigungselement und der Getriebeschaltwelle vorhanden sind.

### Hintergrund der Erfindung

Ein Schaltelement dieser Art ist aus der DE 94 14 598 U1 bekannt. Im Betrieb eines Getriebes, insbesondere eines Kraftfahrzeug-Schaltgetriebes, werden in erheblichem Maße Schwingungen vom Getriebe auf den Schalthebel übertragen, mit dem das Getriebe zwecks Gangwechsel betätigt wird. Besonders starke Vibrationen ergeben sich als Folge von Reaktionskräften aus der Synchronisierung und aufgrund von Toleranzen. Dies ist für den Fahrer des Fahrzeugs unangenehm. Daher wird eine Abkopplung der äußeren Schaltung, also des Betätigungselements (Schalthebels) des Getriebes, vom Schaltmodul bzw. Getriebe angestrebt, um das Betätigungselement frei von Schwingungen halten zu können.

Bekannt ist es hierbei, im Übertragungsweg vom Schalthebel zur Getriebeschaltwelle dämpfende Elemente zwischenzuschalten. Gebräuchlich sind dämpfende Elastomerglieder in den Lagern des Schaltgestänges und im Schalthebellager. Bekannt sind auch Kugelgelenke, bei denen zumindest die Gelenkkugel oder die Gelenkpfanne dämpfend ausgestaltet ist, d. h. beispielsweise mit einem dämpfenden Elastomermaterial überzogen.

Die genannte DE 94 14 598 U1 schlägt vor, ein Kreuzstück des Schaltelements mit elastomerem Material in Form einer Hülse so zu versehen, so dass ein progressiv elastisches Federverhalten und damit auch eine Schwingungsdämpfung bzw. -entkopplung erreicht wird.

Bekannt geworden ist es ferner, zur Drehschwingungsentkopplung zwischen dem Schaltelement und der Getriebeschaltwelle eines Kraftfahrzeuggetriebes Schenkelfedern einzusetzen, die ebenfalls die beiden Teile zumindest teilweise voneinander schwingungstechnisch abkoppeln.

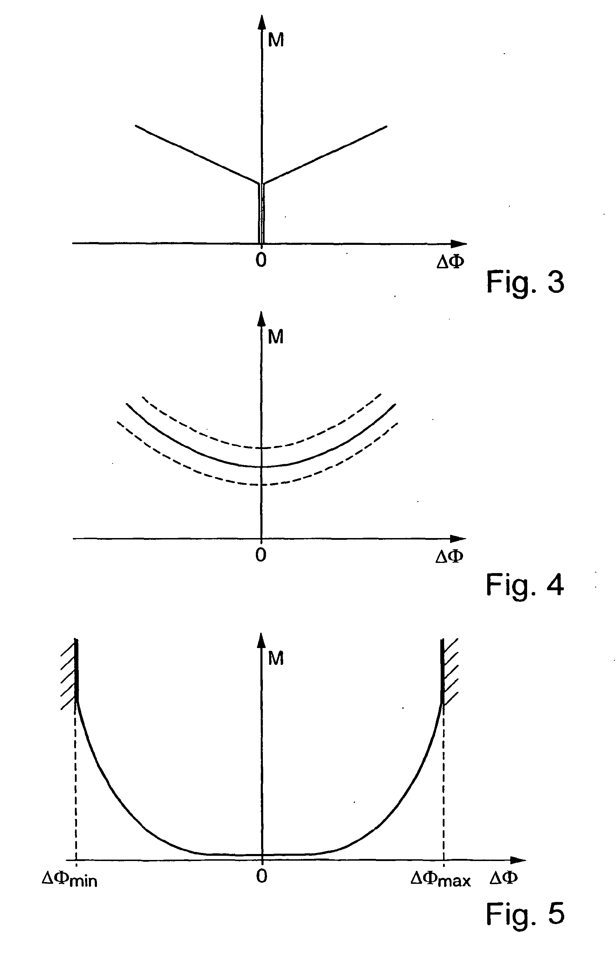

Wird der Differenzdrehwinkel ΔΦ zwischen Betätigungselement und Getriebeschaltwelle, der sich bei Drehung des Betätigungselements (Schalthebel) ergibt, über dem zwischen den beiden genannten Bauteilen übertragbaren Drehmoment M betrachtet, liegt gemäß den vorbekannten Lösungen ein Verlauf vor, wie er aus den Figuren 3 und 4 hervorgeht. Dabei ist in Figur 3 der Verlauf des Drehmoments M über dem Differenzdrehwinkel ΔΦ für eine Ausgestaltung des Schaltelements mit einer Schenkelfeder skizziert. Figur 4 zeigt den Verlauf bei Einsatz von Elastomermaterial zur Schwingungsentkopplung.

Aus Fig. 3 geht hervor, dass sich unmittelbar nach dem Verlassen der Nulllage ein übertragbares Drehmoment ergibt. In Fig. 4 ist zu sehen, dass dies auch hier der Fall ist, wobei durch gestrichelte Linien der zu erwartende Bereich markiert ist, innerhalb dessen sich die Momentenkennlinie befindet. Dies rührt daher, dass das Elastomermaterial hinsichtlich seiner Feder- und Dämpfeigenschaften von zahlreichen Parametern wie zum Beispiel der Temperatur abhängig ist und daher keine genauen Werte für das Feder- und Dämpfverhalten angebbar sind. Zu erkennen ist auch, dass keine starke Progression in der Kennlinie vorhanden ist, wie es an und für sich gewünscht ist.

Die vorbekannten Elemente zur Schwingungsentkopplung sind zudem reibungsbehaftet, was es nicht möglich macht, Kennlinien im Sinne der Figuren 3 und 4 zu realisieren, die einem Ideal entsprechen. Anzustreben ist dabei eine möglichst vollständige Entkopplung in der Neutral- oder Nullstellung und ein progressiver Verlauf bei ansteigendem Differenzdrehwinkel, und zwar unabhängig von der Betriebstemperatur des Getriebes.

Insoweit sind die vorbekannten Lösungen nicht zufriedenstellend, weil die Schwingungsabkopplung zwischen dem Getriebe und dem Betätigungselement (Schalthebel) nur ungenügend ist. Der Schaltkomfort erfüllt damit nicht die hohen Ansprüche, die gefordert werden.

### Aufgabe der Erfindung

Der vorliegenden Erfindung liegt daher die Aufgabe zugrunde, ein Schaltelement der gattungsgemäßen Art so weiterzubilden, dass eine verbesserte Abkopplung des Betätigungselements, d. h. des Schalthebels, des Getriebes vom Getriebe selber erfolgt. Damit soll der Schaltkomfort erhöht werden.

### Zusammenfassung der Erfindung

Die Lösung dieser Aufgabe durch die Erfindung ist dadurch gekennzeichnet, dass die Mittel zur Schwingungsentkopplung mindestens zwei Magnete aufweisen, von denen mindestens einer mit dem Betätigungselement und mindestens einer mit der Getriebeschaltwelle direkt oder indirekt verbunden sind, wobei gleiche Pole der Magnete sich gegenüberliegend angeordnet sind.

Die Erfindung stellt also auf den Einsatz von Magneten ab, um eine möglichst gute Schwingungsabkopplung zwischen dem Betätigungselement (Getriebeschalthebel) und der Getriebeschaltwelle zu erreichen.

Die Magnete sind dabei bevorzugt als Dauermagnete ausgebildet. Bevorzugt ist vorgesehen, dass sich die Pole der Magnete in der Ruhestellung des Schaltelements mit Abstand gegenüberliegen; dieser beträgt in der Ruhestellung des Schaltelements bevorzugt zwischen 1 mm und 10 mm. Damit liegt in der Neutralstellung bzw. Nullstellung gar kein mechanischer Kontakt zwischen dem Betätigungselement und der Getriebeschaltwelle vor, so dass eine optimale Schwingungsentkopplung erreicht werden kann.

Ferner ist bevorzugt vorgesehen dass sich der Abstand bei der Betätigung des Schaltelements bis zum Anliegen einer am Betätigungselement direkt oder indirekt angeordneten Anlagefläche mit einer an der Getriebeschaltwelle direkt oder indirekt angeordneten Anlagefläche verkleinern lässt. Die Anlageflächen können an den Magneten selber ausgebildet sein. Sie können aber auch durch separate Bauteile gebildet werden.

Die Abkopplung des Betätigungselements von der Getriebeschaltwelle kann dabei sowohl hinsichtlich einer Relativdrehung erfolgen als auch bei einer relativen translatorischen Verschiebung der beiden Bauteile vorgesehen werden. In dem letztgenannten Fall wirken also die Magnete im Falle einer beispielsweise axialen Verschiebung des Betätigungselements relativ zur Getriebeschaltwelle zunächst ― in der Nullstellung ― nicht, während bei Vorliegen einer Relativverschiebung progressiv Axialkräfte zwischen den Bauteilen übertragen werden.

Die Magnete können gemäß einer bevorzugten Ausgestaltung der Erfindung als sich über einen vorgegebenen Umfangswinkel erstreckende hohlzylindrische Teile ausgebildet sein, die um eine gemeinsame Achse drehbar angeordnet sind. Der vorgesehene Umfangswinkel liegt besonders bevorzugt zwischen 150° und 180°. In diesem Falle liegen sich quasi zwei halbschalenförmige Magneten gegenüber, wobei in der Nullstellung ein Spaltabstand zwischen den gleichen Polen vorgesehen ist.

Die Magneten können aus einem Seltenen-Erden-Material bestehen. Besonders bevorzugt ist an Magneten aus einer Neodymium-Eisen-Verbindung (NdFe) gedacht. Möglich ist auch eine Kunststoffummantelung der Magnete, um sie vor äußeren Kräften zu schützen.

### Kurze Beschreibung der Figuren

In den Zeichnungen ist ein Ausführungsbeispiel der Erfindung dargestellt. Es zeigen:
- Fig. 1: eine nur schematische Darstellung eines Schaltelements eines Kraftfahrzeuggetriebes mit einem Betätigungselement und einer Getriebeschaltwelle,
- Fig. 2: schematisch den Schnitt A-B gemäß Fig. 1,
- Fig. 3: den Verlauf des übertragbaren Drehmoments bei der Drehung des Betätigungselements relativ zur Getriebeschaltwelle gemäß dem Stand der Technik beim Einsatz einer Schenkelfeder,
- Fig. 4: den Verlauf des übertragbaren Drehmoments analog zu Fig. 3 gemäß dem Stand der Technik beim Einsatz von Elastomermaterial und
- Fig. 5: den Verlauf des übertragbaren Drehmoments analog zu Fig. 3 gemäß einer Ausführungsform der Erfindung.

### Ausführliche Beschreibung der Figuren

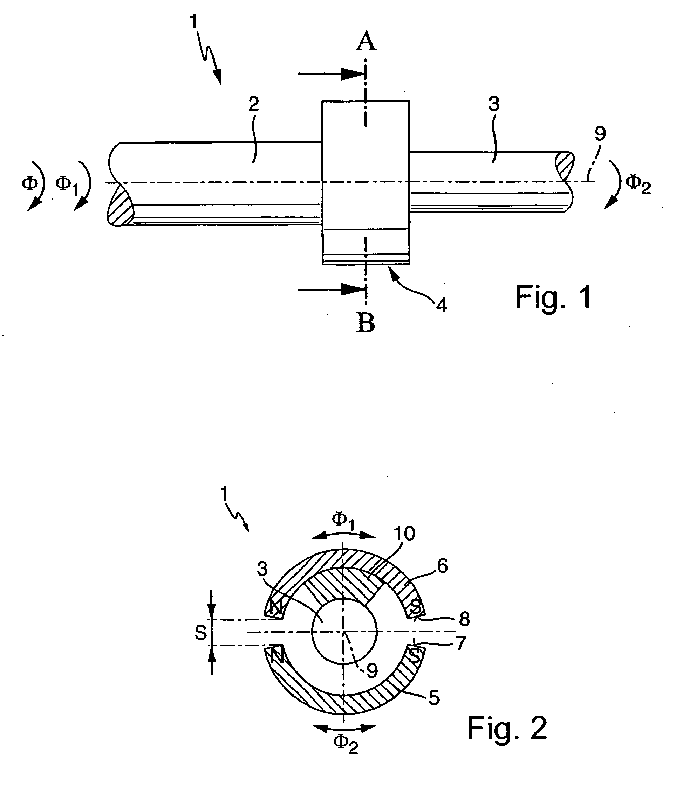

In Fig. 1 ist eine Prinzipskizze zu sehen, die den grundsätzlichen Aufbau eines Teils eines Kraftfahrzeugschaltgetriebes zeigt, nämlich ein Schaltelement 1. Dieses besteht - hier vereinfacht dargestellt - aus einem Betätigungselement 2 in Form einer drehbaren Welle, die als Getriebeschalthebel händisch vom Fahrer des Fahrzeugs über einen nicht dargestellten Handgriff betätigt wird. Das Betätigungselement 2 überträgt die Schaltbewegungen des Fahrers auf die Getriebeschaltwelle 3, über die im Inneren des Getriebes der Schaltvorgang durchgeführt wird.

Zwischen dem Betätigungselement 2 und der Getriebewelle 3 sind Mittel 4 angeordnet, die zur Schwingungsentkopplung des Betätigungselements 2 von den Vibrationen der Getriebewelle 3 dienen.

Im Ausführungsbeispiel ist vereinfacht dargestellt, dass beide Bauteile 2, 3 um dieselbe Achse 9 drehen können. Allerdings sei angemerkt, dass sich das erfindungsgemäße Prinzip genauso auch anwenden lässt, wenn eine translatorische Verschiebebewegung von dem Betätigungselement 2 auf die Getriebewelle 3 zu übertragen ist, namentlich eine axiale Verschiebebewegung.

In Fig. 1 ist angedeutet, dass eine Drehbewegung Φ von dem Betätigungselement 1 auf die Getriebewelle 2 zu übertragen ist. D. h. der Fahrer leitet an dem Betätigungselement 2 eine Drehung um den Winkel Φ₁ ein, der sich an der Getriebeschaltwelle 3 als Drehung um den Winkel Φ₂ auswirkt. Der Differenzdrehwinkel ΔΦ = Φ₁ - Φ₂ ist in Fig. 5 für eine erfindungsgemäße Ausgestaltung über dem damit übertragbaren Drehmoment M angegeben.

Zu erkennen ist, dass bei einem Differenzdrehwinkel ΔΦ von Null auch kein Drehmoment M übertragen wird. In vorteilhafter Weise liegt auch bei kleinen Differenzdrehwinkeln ΔΦ praktisch kein zu übertragendes Drehmoment M vor. Erst bei weiter wachsendem Differenzdrehwinkel ΔΦ steigt das übertragbare Drehmoment M an, und zwar progressiv.

Erreicht wird dies mit einer Ausgestaltung, wie sie exemplarisch in Fig. 2 zu sehen ist.

An die beiden schwingungsentkoppelt zu verbindenden Bauteile 2 und 3 ist jeweils ein Magnet 5 bzw. 6 angebracht. In der Schnittdarstellung gemäß Fig. 2 ist ein Halteelement 10 zu sehen, das den Magneten 6 an der Getriebeschaltwelle 3 festlegt; nicht dargestellt ist ein entsprechendes Halteelement zur Fixierung des Magneten 5 am Betätigungselement 2.

Beide Magneten sind als Teile eines Hohlzylinders ausgebildet, wobei sich beide Teile um einen Umfangswinkel von ca. 160° bis 170° erstrecken; die Magnete 5, 6 sind also halbschalenförmig ausgeführt. Sie sind so angeordnet, dass sich die jeweiligen Pole, also der Nordpol N und der Südpol S, gleichgerichtet gegenüberliegen. Befindet sich ― wie in Fig. 2 dargestellt ― das Schaltelement in der Nullstellung, liegt also kein Differenzdrehwinkel ΔΦ zwischen den Teilen 2 und 3 vor, liegen sich die beiden gleichen Pole N, S der Magneten 5, 6 mit Luftspalt zwischen sich in einem Abstand s gegenüber.

Aufgrund der abstoßenden Wirkung der sich gegenüberliegenden gleichen Pole N, S der Magnete 5, 6 hat die Einleitung eines Differenzdrehwinkels ΔΦ zwischen dem Betätigungselement 2 und der Getriebeschaltwelle 3 die Übertragung eines Drehmoments M zur Folge, wie es aus Fig. 5 hervorgeht. Die Pole der Magneten 5, 6 bilden Anlageflächen 7 und 8, die bei Erreichen des entsprechenden relativen Drehwinkels einen mechanischen Anschlag darstellen. D. h. bei Erreichen eines maximalen Differenzdrehwinkels ΔΦₘₐₓ bzw. eines minimalen Differenzdrehwinkels ΔΦₘᵢₙ liegen die Anlageflächen 7 und 8 aneinander, so dass beliebig große Drehmomente M übertragen werden können.

Als Magneten 5, 6 kommen bevorzugt Dauer- oder Permanentmagnete zum Einsatz. Diese können aus einem oder mehreren Elementen der Seltenen Erden bestehen. Die Seltenen Erden, auch Lanthanide genannt, sind die 15 Elemente mit der Atomzahl 57 bis 71 im Periodensystem der Elemente. Für die Herstellung von Magneten kommt vor allem Samarium (Sm) und Neodymium (Nd) in Frage. Samarium ist nur mit einem geringen Anteil in den Seltenen Erden enthalten. Die Aufarbeitung mit einem hohen Reinheitsgrad ist sehr aufwendig. Der Anteil von Neodymium in den Seltenen Erden ist höher, weshalb dieses Element bevorzugt zum Einsatz kommt.

### Bezugszeichenliste

- 1: Schaltelement
- 2: Betätigungselement
- 3: Getriebeschaltwelle
- 4: Mittel zur Schwingungsentkopplung
- 5: Magnet
- 6: Magnet
- 7: Anlagefläche
- 8: Anlagefläche
- 9: Achse
- 10: Halteelement

- Φ: Drehbewegung
- Φ₁: erster Drehwinkel
- Φ₂: zweiter Drehwinkel
- ΔΦ: Differenzdrehwinkel
- ΔΦₘₐₓ: maximaler Differenzdrehwinkel
- ΔΦₘᵢₙ: minimaler Differenzdrehwinkel
- s: Abstand
- N: Nordpol
- S: Südpol
- M: Drehmoment

## Patentansprüche

1. Schaltelement (1) für ein Schaltgetriebe, insbesondere für ein Kraftfahrzeuggetriebe, zur Übertragung einer Drehbewegung (Φ) und/oder einer translatorischen Bewegung von einem Betätigungselement (2) auf eine Getriebeschaltwelle (3), wobei Mittel (4) zur Schwingungsentkopplung zwischen dem Betätigungselement (2) und der Getriebeschaltwelle (3) vorhanden sind,
**dadurch gekennzeichnet,**
**dass** die Mittel (4) zur Schwingungsentkopplung mindestens zwei Magnete (5, 6) aufweisen, von denen mindestens einer mit dem Betätigungselement (2) und mindestens einer mit der Getriebeschaltwelle (3) direkt oder indirekt verbunden sind, wobei gleiche Pole (N, S) der Magnete (5, 6) sich gegenüberliegend angeordnet sind.

2. Schaltelement nach Anspruch 1, **dadurch gekennzeichnet, dass** die Magnete (5, 6) Dauermagnete sind.

3. Schaltelement nach Anspruch 1, **dadurch gekennzeichnet, dass** sich die Pole (N, S) der Magnete (5, 6) in der Ruhestellung des Schaltelements (1) mit Abstand (s) gegenüberliegen.

4. Schaltelement nach Anspruch 3, **dadurch gekennzeichnet, dass** der Abstand (s) in der Ruhestellung des Schaltelements (1) zwischen 1 mm und 10 mm beträgt.

5. Schaltelement nach Anspruch 3, **dadurch gekennzeichnet, dass** sich der Abstand (s) bei der Betätigung des Schaltelements (1) bis zum Anliegen einer am Betätigungselement (2) direkt oder indirekt angeordneten Anlagefläche (7) mit einer an der Getriebeschaltwelle (3) direkt oder indirekt angeordneten Anlagefläche (8) verkleinern lässt.

6. Schaltelement nach Anspruch 5, **dadurch gekennzeichnet, dass** die Anlageflächen (7, 8) an den Magneten (5, 6) ausgebildet sind.

7. Schaltelement nach Anspruch 1, **dadurch gekennzeichnet, dass** die Magnete (5, 6) als sich über einen vorgegebenen Umfangswinkel erstreckende hohlzylindrische Teile ausgebildet sind, die um eine gemeinsame Achse (9) drehbar angeordnet sind.

8. Schaltelement nach Anspruch 7, **dadurch gekennzeichnet, dass** sich die als hohlzylindrische Teile ausgebildete Magnete (5, 6) über einen Umfangswinkel zwischen 150° und 180° erstrecken.

9. Schaltelement nach Anspruch 1, **dadurch gekennzeichnet, dass** die Magneten (5, 6) aus einem Seltenen-Erden-Material bestehen.

10. Schaltelement nach Anspruch 1, **dadurch gekennzeichnet, dass** die Magneten (5, 6) aus einer Neodymium-Eisen-Verbindung (NdFe) bestehen.

11. Schaltelement nach Anspruch 1, **dadurch gekennzeichnet, dass** die Magneten (5, 6) eine Kunststoffummantelung aufweisen.

## Claims

1. Gearshift element (1) for a mechanical transmission, in particular for a gearbox of an automotive vehicle, for the transmission of a rotational motion (φ) and/or a translational motion from an actuating element (2) to a transmission selector shaft (3), means (4) being provided for vibratory uncoupling between the actuating element (2) and the transmission selector shaft (3),
**characterised in that**
the means (4) for vibratory uncoupling comprise at least two magnets (5, 6), at least one of which is connected directly or indirectly to the actuating element (2) and at least one of which is connected directly or indirectly to the transmission selector shaft (3), like poles (N, S) of the magnets (5, 6) being arranged opposite each other.

2. Gearshift element according to claim 1, **characterised in that** the magnets (5, 6) are permanent magnets.

3. Gearshift element according to claim 1, **characterised in that**, in the inoperative position of the gearshift element (1), the poles (N, S) of the magnets (5, 6) are situated at a distance (s) opposite each other,

4. Gearshift element according to claim 3, **characterised in that** the distance (s) in the inoperative position of the gearshift element (1) lies between 1 mm and 10 mm.

5. Gearshift element according to claim 3, **characterised in that**, during the actuation of the gearshift element (1), the distance (s) can be diminished till a bearing surface (7) arranged directly or indirectly on the actuating element (2) comes to bear against a bearing surface (8) arranged directly or indirectly on the transmission selector shaft (3).

6. Gearshift element according to claim 5, **characterised in that** the bearing surfaces (7, 8) are configured on the magnets (5, 6).

7. Gearshift element according to claim 1, **characterised in that** the magnets (5, 6) are configured as hollow cylindrical parts extending over a predefined circumferential angle while being arranged for rotation about a common axis (9).

8. Gearshift element according to claim 7, **characterised in that** the magnets (5, 6) configured as hollow cylindrical parts extend over a circumferential angle lying between 150° and 180°.

9. Gearshift element according to claim 1, **characterised in that** the magnets (5, 6) are made of a rare-earth material.

10. Gearshift element according to claim 1, **characterised in that** the magnets (5, 6) are made of a neodymium iron compound (NdFe).

11. Gearshift element according to claim 1, **characterised in that** the magnets (5, 6) possess a plastic sheathing.

## Revendications

1. Elément (1) de changement de vitesse pour une transmission manuelle, en particulier pour une boîte de vitesses pour des véhicules automobiles, pour la transmission d'un mouvement de rotation (φ) et/ou d'un mouvement de translation à partir d'un élément (2) d'actionnement à un arbre (3) de changement de vitesse de la transmission, il étant prévu des moyens (4) de désaccouplement de vibrations entre l'élément (2) d'actionnement et l'arbre (3) de changement de vitesse de la transmission,
**caractérisé en ce que**
les moyens (4) de désaccouplement de vibrations comprennent, au moins, deux aimants (5, 6), dont, au moins, l'un est relié directement ou indirectement à l'élément (2) d'actionnement et, au moins, l'un est relié directement ou indirectement à l'arbre (3) de changement de vitesse de la transmission, des pôles identiques (N, S) des aimants (5, 6) étant agencés vis-à-vis, l'un de l'autre.

2. Elément de changement de vitesse selon la revendication 1, **caractérisé en ce que** les aimants (5, 6) sont des aimants permanents.

3. Elément de changement de vitesse selon la revendication 1, **caractérisé en ce que**, dans la position de repos de l'élément (1) de changement de vitesse, les pôles (N, S) des aimants (5, 6) sont situés vis-à-vis, l'un de l'autre, à un écart (s).

4. Elément de changement de vitesse selon la revendication 3, **caractérisé en ce que** l'écart (s) dans la position de repos de l'élément (1) de changement de vitesse est situé entre 1 mm et 10 mm.

5. Elément de changement de vitesse selon la revendication 3, **caractérisé en ce que**, lors d'un actionnement de l'élément (1) de changement de vitesse, l'écart (s) peut être diminué jusqu'au moment où une surface d'appui (7) agencée directement ou indirectement sur l'élément (2) d'actionnement vient s'appuyer contre une surface d'appui (8) agencée directement ou indirectement sur l'arbre (3) de changement de vitesse de la transmission.

6. Elément de changement de vitesse selon la revendication 5, **caractérisé en ce que** les surfaces d'appui (7, 8) sont configurées sur les aimants (5, 6).

7. Elément de changement de vitesse selon la revendication 1, **caractérisé en ce que** les aimants (5, 6) sont configurés sous la forme de pièces cylindriques creuses qui s'étendent sur un angle circonférentiel prédéfini en étant agencées en rotation autour d'un axe (9) commun.

8. Elément de changement de vitesse selon la revendication 7, **caractérisé en ce que** les aimants (5, 6) configurés sous la forme de pièces cylindriques creuses s'étendent sur un angle circonférentiel de 150° et 180°.

9. Elément de changement de vitesse selon la revendication 1, **caractérisé en ce que** les aimants (5, 6) sont faits en un matériau des terres rares.

10. Elément de changement de vitesse selon la revendication 1, **caractérisé en ce que** les aimants (5, 6) sont faits en un composé de néodyme et de fer (NdFe).

11. Elément de changement de vitesse selon la revendication 1, **caractérisé en ce que** les aimants (5, 6) possèdent un enrobage en matière synthétique.
